# EUROPEAN PATENT APPLICATION

(11) **EP 2 813 381 A1**
(43) Date of publication of application: **17.12.2014**
(21) Application number: 14155398.2
(22) Date of filing: 17.02.2014
(51) Int. Cl.: B60G 7/00

(54) **Lower arm for a vehicle suspension system**

(30) Priority: 11.06.2013 KR 20130066214
(71) Applicant: Austem Co. Ltd., Susin-myeon, Cheonan-si Chungcheongnam-do 330-882 (KR)
(72) Inventor: Park, Sung Ha, 121-260 Seoul (KR); Yoo, Yui Youn, Gimpo-si, Gyeonggi-do, 415-882 (KR); Kim, Yong Sik, 422-751 Bucheon-si, Gyeonggi-do (KR); Yoon, Jae Gyu, 405-260 Namdong-gu, Incheon (KR)
(74) Representative: Straube, Urs Norman

(57) **Abstract**

In order to allow easy manufacture and to enable high stability and low weight, a lower arm for a vehicle suspension system (100) comprising a first bush mounting part (110) and a second bush mounting part (120) is provided. A first arm (101) of the vehicle suspension system (100) has one end part connected to the first bush mounting part (110). A second arm (106) has one end part extending integrally from the first arm (101) and the other end part connected to the second bush mounting part (120). The first arm (101) is formed by forming a metal plate, the one end part of the first arm (101) connected to the first bush mounting part (110) has a pair of ring members which are formed by forming the metal plate to be parallel therebetween in an axial direction and to contact and support through their inner round surfaces an outer round surface of the first bush mounting part (110).

## Description

### I.Background of the Invention

### A.Field of Invention

The present invention relates to a lower arm for a vehicle suspension system, and more particularly to a lower arm for vehicle suspension system which can be easily manufactured by removing welding parts in the manufacturing process and which can accomplish high strength and weight reduction.

### B.Description of the Related Art

There are various kinds of vehicle suspension systems including Macpherson type, Wishbone type, trailing link type, multi-link type and etc.

Among them the Macpherson type is usually used as a front wheel suspension system of a vehicle which includes a wheel mounting assembly to attach a tire, a knuckle arm to support the wheel mounting assembly, a lower arm to rotatably support the knuckle arm, a shock absorber to decrease shock transferred to the knuckle arm and etc.

An example of these components is shown in Korean Patent Application Publication No. 2002-90497 "JUDDER REDUCTION SYSTEM FOR LOWER ARM"(publication date: Dec. 5, 2002) and detail description thereof is omitted in this specification.

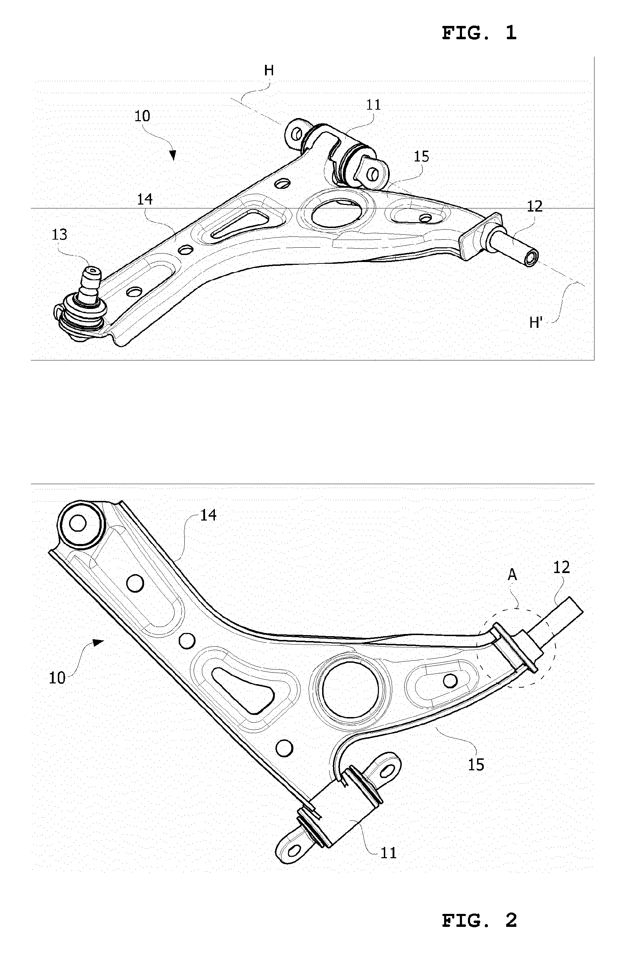

Fig. 1 and Fig. 2 show an exemplary embodiment of a lower arm 10 among the components included in the vehicle suspension system of Macpherson type. The lower arm 10 has a first bush mounting part 11 and a second bush mounting part 12. A first arm 14 extends from the first bush mounting part 11 to a ball joint mounting part 13 at the other end, and a second arm 15 extends integrally from the first arm 14 so that it is connected to the second bush mounting part 12 at its end.

Therefore, the first bush mounting part 11 and the second bush mounting part 12 spaced apart at front and rear are respectively mounted to a front member assembly of the vehicle chassis to be rotatable around horizontal axes of H and H'.

In such a mounting structure, the first arm 14 extrudes laterally from the vehicle chassis, and a ball joint (not shown) is mounted to the ball joint mounting part 13 which is connect to the end part of the first arm 14 to support the knuckle arm described above, so that the wheel mounting assembly can be rotatably supported.

As the lower arm 10 of the above configuration has the first bush mounting part 11 welded integrally to an end part of the first arm 14 and the second bush mounting part 12 welded integrally to the end part of the second arm 15, the manufacturing is difficult and delayed due to the welding processes of the parts. Also, defects are generated in the welding parts during the manufacturing process and cracks are generated in use thus decreasing durability.

In addition, the overall weight of the lower arm 10 increases because the additional members 11 and 14 are attached by welding.

Therefore, to solve the above problems, there is a need of access in the aspect of the shape to satisfy a condition of a smaller size and a higher strength in accordance with recent trends of miniaturization and weight and cost reductions.

### II.Summary of the Invention

Accordingly, it is an object of the present invention to provide a lower arm for vehicle suspension system which can be manufactured easily, has a high strength and a low weight.

In order to accomplish the above object, the present invention provides a lower arm for vehicle suspension system comprising a first bush mounting part and a second bush mounting part mounted to a front member mounting assembly of a vehicle chassis to be spaced apart therebetween at front and rear, a first arm having one end part connected to the first bush mounting part and the other end part extruding laterally from the vehicle chassis to be connected to a ball joint mounting part to support a wheel mounting assembly, and a second arm having one end part extending integrally from the first arm and the other end part connected to the second bush mounting part, wherein the first arm is formed by forming a metal plate, the one end part of the first arm connected to the first bush mounting part has a pair of ring members which are formed by forming the metal plate to be parallel therebetween in an axial direction and to contact and support through their inner round surfaces an outer round surface of the first bush mounting part. Welding parts are removed in the manufacturing process

According to an aspect of the present invention, a first holder sleeve extends from one of a pair of the ring members in the axial direction to contact and support the outer round surface of the first bush mounting part.

According to an aspect of the present invention, a second holder sleeve extends from the other of a pair of the ring members in the axial direction to contact and support the outer round surface of the first bush mounting part.

According to an aspect of the present invention, the first holder sleeve and the second holder sleeve extend in the same axial direction or in the opposite axial direction therebetween.

According to an aspect of the present invention, the second arm is formed by forming the metal plate together with the first arm, and the second bush mounting part is comprised as a part of the second arm by forming the other end part of the second arm into a round shape.

According to an aspect of the present invention, the second bush mounting part has a stopper sleeve and a bush sleeve having a smaller diameter than the stopper sleeve which are formed in order in the axial direction at the other end part of the second arm.

According to an aspect of the present invention, the bush sleeve is inserted into the bush via a predetermined elastic member to elastically supports the bush, and at least a part of the stopper sleeve is inserted into the bush to be spaced apart from an inner surface of the bush by a predetermined gap so that limit of a radial fluctuation of the bush is restricted.

In order to accomplish the above object, the present invention also provides a lower arm for vehicle suspension system comprising a first bush mounting part and a second bush mounting part mounted to a front member mounting assembly of a vehicle chassis to be spaced apart therebetween at front and rear, a first arm having one end part connected to the first bush mounting part and the other end part extruding laterally from the vehicle chassis to be connected to a ball joint mounting part to support a wheel mounting assembly, and a second arm having one end part extending integrally from the first arm and the other end part connected to the second bush mounting part, wherein the second arm is formed by forming a metal plate, and the second bush mounting part is comprised as a part of the second arm by forming the other end part of the second arm into a round shape.

According to the lower arm for vehicle suspension system of the present invention as described above, welding parts are removed in the manufacturing process, so that easy manufacturing compared to the conventional art can be accomplished and high strength and weight reduction compared to the conventional art can also be accomplished.

### III.Brief Description of the Drawings

Fig. 1 and Fig. 2 are upper and lower perspective views of a lower arm for vehicle suspension system according to a conventional art;
Fig. 3 and Fig. 4 are a perspective view and a plan view of the lower arm for vehicle suspension system according to an exemplary embodiment of the present invention;
Fig. 5 is a partially exploded perspective view of the lower arm for vehicle suspension system of Fig. 3;
Fig. 6 shows partially expanded perspective views of several exemplary modifications of a principal part of the lower arm for vehicle suspension system of Fig. 3;
Fig. 7 is a partially exploded perspective view of the lower arm for vehicle suspension system of Fig. 3; and
Fig. 8 shows partially expanded sectional views of several exemplary modifications of another principal part of the lower arm for vehicle suspension system of Fig. 3.

### IV.Detailed Description of the Invention

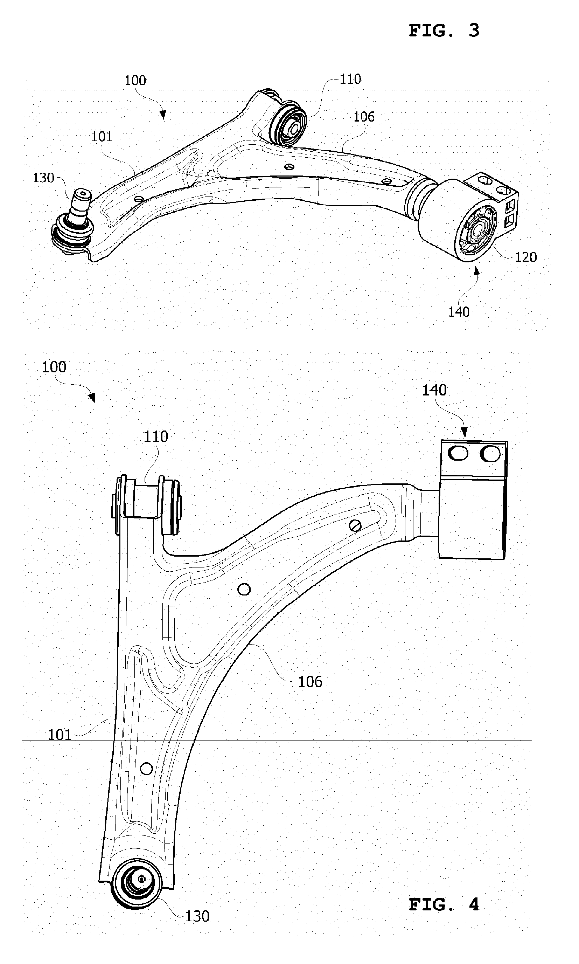

As shown in Fig. 3 and Fig. 4, a lower arm for vehicle suspension system 100 according to an exemplary embodiment of the present invention has a first bush mounting part 110 and a second bush mounting part 120 at front and rear, a first arm 101 extending from the first bush mounting part 110 to a ball joint mounting part 130, and a second arm 106 extending integrally from the first arm 101 to be connected to the second bush mounting part 120.

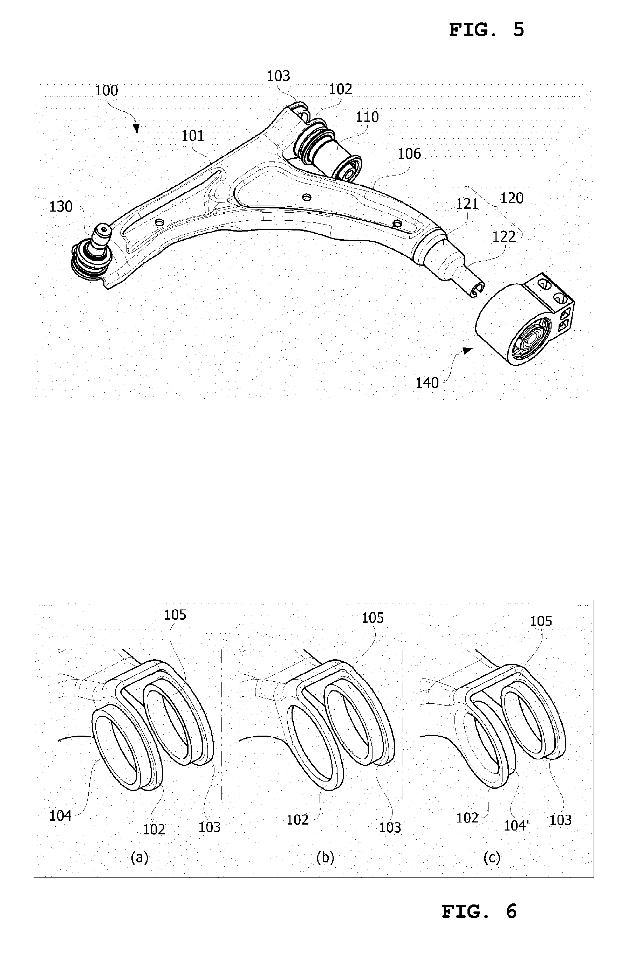

In this embodiment, the first arm 101 and the second arm 106 are formed integrally by forming a single steel plate. In this case, an end part of the first arm 101 which is connected to the first bush mounting part 110 is formed into a pair of ring members 102 and 103 as shown in Fig. 5 and Fig. 6 (a).

A pair of the ring members 102 and 103 are formed spaced apart therebetween in the axial direction and contact and support an outer round surface of the first bush mounting part 110 through their inner round surfaces.

In addition, in this embodiment, the ring members 102 and 103 have holder sleeves 104 and 105 extending from the inner round surfaces in the axial direction so that the outer round surface of the first bush mounting part 110 is contacted and supported by the holder sleeves 104 and 105.

Therefore, there is no need of the conventional welding combination structure (refer to 11 of Fig. 1) to support the first bush mounting part 110 by forming a pair of the ring members 102, 103 and the holder sleeves 104, 105 as described above.

Although the holder sleeves 104, 105 are explained to extend from both ring members 102, 103 in this embodiment, the present invention is not limited to such constitution. The holder sleeve 105 may be formed only at either one of the ring members 102, 103 as shown in Fig. 6 (b) or there may be no holder sleeves formed at the ring members 102, 103.

Also, when the holder sleeves 104, 105 are formed at both ring members 102, 103, the holder sleeves 104, 105 may be formed to extend in the same axial direction as shown in Fig. 6 (a), or they may be formed to extend in the opposite axial direction as shown in Fig. 6 (c).

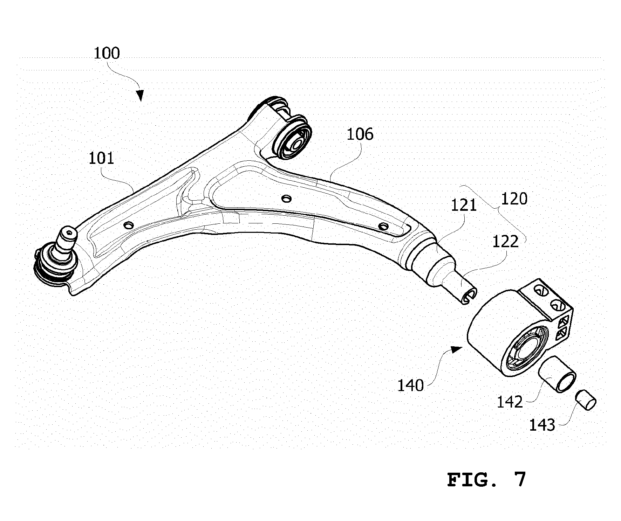

As shown in Fig. 5 and Fig. 7, the lower arm for vehicle suspension system 100 according to the exemplary embodiment of the present invention has the second bush mounting part 120 to be comprised as a part of the second arm 106.

That is, the second bush mounting part 120 is formed by forming a free end part of the second arm 106 into a round shape while the second arm 106 is being formed.

A bush 140 is supported by being inserted into the second bush mounting part 120 which has been formed into the round shape.

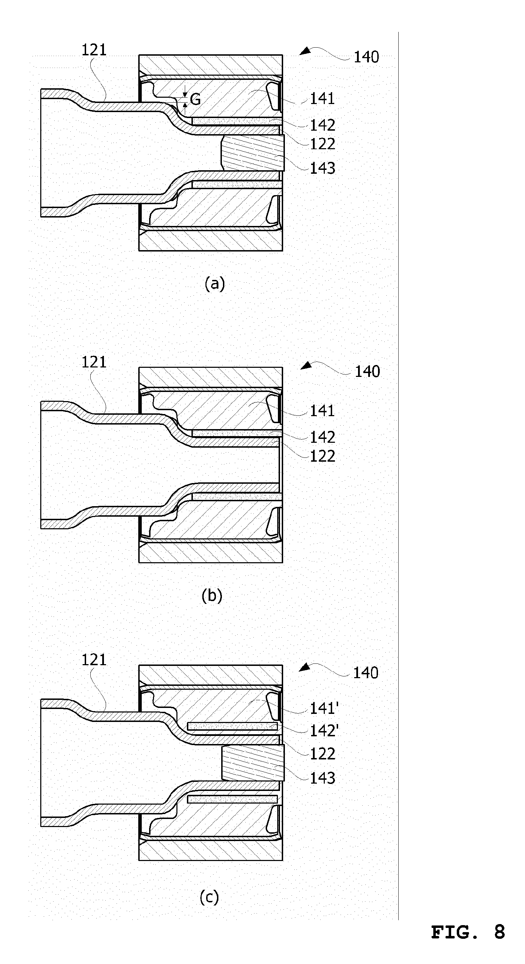

To be more specific, as shown in Fig. 7 and Fig. 8 (a), the bush 140 according to this exemplary embodiment is inserted by an elastic member 141 on its inner round surface to absorb impact and the second bush mounting part 120 is inserted into the elastic member 141, so that the bush 140 is elastically supported by the second bush mounting part 120 via the elastic member 141.

Especially, the second bush mounting part 120 has a stopper sleeve 121 and a bush sleeve 122 which are formed in order at the above free end of the second arm 106.

The stopper sleeve 121 has a comparably big diameter and the bush sleeve 122 has a smaller diameter compared to the stopper sleeve 121 so that the stress transferred between the second arm 106 and the bush 140 can be supported through the stopper sleeve 121. Therefore, the second bush mounting part 120 can be prevented from being broken down due to the stress to be concentrated at the second bush mounting part 120.

The bush sleeve 122 is inserted into the elastic member 141 via a steel bush 142 to support the bush 140. A fastener 143 is inserted from an axial end part of the bush sleeve 122.

The stopper sleeve 121 is a component not only for preventing breakdown of the second bush mounting part 120 due to the stress concentration as described above, but also performing function of restricting a radial fluctuation limit of the bush 140 with its end part inserted into the bush 140 by making a predetermined gap G which is formed in the radial direction between the stopper sleeve 121 and the elastic member 141 inserted into the bush 140.
Therefore, an excessive vibration due to the impact from the tire can be prevented from transferring to the vehicle chassis.

Although the free end part of the bush sleeve 122 is explained to be inserted by the fastener 143 in the above embodiment, the present invention is not limited to such constitution, for example, as shown in Fig. 8 (b), the fastener 143 may not be inserted into the bush sleeve.

Also, according to the kind of the bush 140, as shown in Fig. 8 (c), the steel bush 142' may be provided to be inserted within the elastic member 141'.

Although the lower arm for vehicle suspension system 100 according to the exemplary embodiment of the present invention has been disclosed, various modifications, additions and substitutions are possible, without departing from the scope and spirit of the invention. Therefore, the above embodiment must be regarded as one example provided for description of the present invention, rather than to limit the present invention.

## Claims

1. A lower arm for a vehicle suspension system comprising a first bush mounting part and a second bush mounting part mounted to a front member mounting assembly of a vehicle chassis to be spaced apart therebetween at front and rear, a first arm having one end part connected to the first bush mounting part and the other end part extruding laterally from the vehicle chassis to be connected to a ball joint mounting part to support a wheel mounting assembly, and a second arm having one end part extending integrally from the first arm and the other end part connected to the second bush mounting part, **characterized in that** the first arm is formed by forming a metal plate, that the one end part of the first arm connected to the first bush mounting part has a pair of ring members which are formed by forming the metal plate to be parallel therebetween in an axial direction and to contact and support through their inner round surfaces an outer round surface of the first bush mounting part.

2. The lower arm for vehicle suspension system according to claim 1, **characterized in that** a first holder sleeve extends from one of a pair of the ring members in the axial direction to contact and support the outer round surface of the first bush mounting part.

3. The lower arm for vehicle suspension system according to claim 2, **characterized in that** a second holder sleeve extends from the other of a pair of the ring members in the axial direction to contact and support the outer round surface of the first bush mounting part.

4. The lower arm for vehicle suspension system according to claim 3, **characterized in that** the first holder sleeve and the second holder sleeve extend in the same axial direction or in the opposite axial direction therebetween.

5. The lower arm for vehicle suspension system according to claim 1, **characterized in that** the second arm is formed by forming the metal plate together with the first arm, and the second bush mounting part is comprised as a part of the second arm by forming the other end part of the second arm into a round shape.

6. The lower arm for vehicle suspension system according to claim 5, **characterized in that** the second bush mounting part has a stopper sleeve and a bush sleeve having a smaller diameter than the stopper sleeve which are formed in order in the axial direction at the other end part of the second arm.

7. The lower arm for vehicle suspension system according to claim 6, **characterized in that** the bush sleeve is inserted into the bush via a predetermined elastic member to elastically supports the bush, and at least a part of the stopper sleeve is inserted into the bush to be spaced apart from an inner surface of the bush by a predetermined gap so that limit of a radial fluctuation of the bush is restricted.

8. A lower arm for vehicle suspension system comprising a first bush mounting part and a second bush mounting part mounted to a front member mounting assembly of a vehicle chassis to be spaced apart therebetween at front and rear, a first arm having one end part connected to the first bush mounting part and the other end part extruding laterally from the vehicle chassis to be connected to a ball joint mounting part to support a wheel mounting assembly, and a second arm having one end part extending integrally from the first arm and the other end part connected to the second bush mounting part, **characterized in that** the second arm is formed by forming a metal plate, and the second bush mounting part is comprised as a part of the second arm by forming the other end part of the second arm into a round shape.
